# EUROPÄISCHE PATENTSCHRIFT

(11) **EP 3 545 741 B1**
(45) Veröffentlichungstag und Bekanntmachung des Hinweises auf die Patenterteilung: **20.10.2021**
(21) Anmeldenummer: 19153920.4
(22) Anmeldetag: 28.01.2019
(51) Int. Cl.: A01D 34/00, A01D 34/73

(54) **MULCHMESSER FÜR EIN MÄHGERÄT**
MULCHING BLADE FOR A MOWING APPARATUS
LAMES DÉCHIQUETEUSES POUR UN APPAREIL DE FAUCHAGE

(30) Priorität: 29.03.2018 DE 102018107533
(43) Veröffentlichungstag der Anmeldung: 02.10.2019
(73) Patentinhaber: Berndl, Georg, 84494 Niederbergkirchen (DE)
(72) Erfinder: Berndl, Georg, 84494 Niederbergkirchen (DE)
(74) Vertreter: Rothkopf, Ferdinand

(56) Entgegenhaltungen:
- CA-A1- 2 513 244
- DE-U1-202017 100 938
- US-A- 4 715 173
- US-A- 4 977 735
- US-A- 5 167 109
- US-A- 5 199 251
- US-A1- 2008 098 706

## Beschreibung

### Hintergrund der Erfindung

Die Erfindung betrifft ein Mähgerät mit einem Mulchmesser mit einer um eine Drehachse rotierbaren Nabe und mindestens einem von der Nabe in radialer Richtung abstehenden Messerflügel, der einen von der Nabe abgewandten Flügelendbereich aufweist.

Ein Mulchmesser ist ein an einem Mähgerät angebrachtes Messer, mit dem ein Mähgut, wie zum Beispiel Gras, Sträucher oder Büsche, geschnitten werden kann. Das Mulchmesser ist dazu an einer zugehörigen Maschine, wie einem Rasenmäher, einem Mulcher oder einem Freischneider anzubringen. Grundsätzlich ist die Funktion des Mulchmessers vergleichbar mit der Funktion eines Mähmessers, wobei ihm zusätzlich die Funkion zukommt, dass es abgetrenntes Mähgut zerkleinert und in das nicht abgetrennte Bestandsgut nach unten hineindrängt. Dabei ist das Mähgerät an dem Mähgerät mittels der Nabe befestigt und von diesem mit hoher Drehzahl zu rotieren bzw. drehen. Die Nabe ist meist mit einer Öffnung gestaltet, die auf eine Welle geschoben und dort drehfest gehalten ist. Von der Nabe steht der mindestens eine Messerflügel ab. Normalerweise sind zwei, drei oder vier solche Messerflügel vorgesehen. Der einzelne Messerflügel erstreckt sich also weg von der Nabe bis zu seinem Endbereich, dem Flügelendbereich.

Bei Mulchmessern mit herkömmlichen Messerflügeln ist deren Schneid- bzw. Mähleistung nicht immer zufriedenstellend. Insbesondere bei längerem Mähgut sinkt die Mähleistung.

Aus CA 2 513 244 A1 ist ein rotierbares Rasenmähermesser bekannt, das an seinen beiden Enden dreigeteilt ist. Mit der Dreiteilung sind jeweils drei Schnittkanten gebildet, die sich längs des Rasenmähermessers erstrecken. Davon dient eine erste, vordere Schnittkante zum Mähen des Grases. In Bezug auf die erste Schnittkante nach oben gebogen sind die zweite und dritte Schnittkante angeordnet, die das gemähte Gras während derselben Umdrehung weiter zerkleinern.

Aus US 5 167 109 A ist ein längsgestreckter Rotationsflügel bekannt, bei dem in Längsrichtung eine Schnittkante vorgesehen ist. Zudem sind an dem Rotationsflügel mehrere Schredder angeordnet, wovon jeder Schredder mehrere Schnittkanten aufweist. Dabei ist jeder Schredder in Bezug auf den Rotationsflügel jeweils um eine Drehachse frei rotierbar, damit ein Schaden an dem Schredder vermieden werden kann, wenn der Schredder einen Stein trifft.

Aus US 2008/098706 A1 ist es bekannt, vertikale Mulchmesser nach oben gerichtet an einem Messerflügel anzuordnen.

Aus US 4 715 173 A ist ein Grasschneidelement eines Rasenmähers mit Schneidkanten bekannt, die parallel zueinander in verschiedenen horizontalen Schnittebenen angeordnet sind.

Aus US 4 977 735 A ist ein Rasenmähermesser bekannt, an dem Elemente vorgesehen sind, mit denen jeweils eine nach unten versetzte, parallele, radiale Schneidkante gebildet ist.

Aus US 5 199 251 A ist ein Grasschneidemesser mit einem führenden Schneidelement und einem in Bezug auf das führende Schneidelement nach oben gerichtetem nachlaufenden Schneidelement bekannt. Dabei weist das nachlaufende Schneidelement zwei unterschiedlich orientierte Schneidkanten auf. Die radial äußere Schneidkante verläuft entlang eines nach unten gerichteten Sporns. Der Sporn dient zum Erzeugen eines Luftstroms in Richtung zur Drehachse und bietet mittels der Schneidkante eine gewisse Schneidwirkung.

### Zugrundeliegende Aufgabe

Der Erfindung liegt die Aufgabe zugrunde, ein Mulchmesser zu schaffen, das eine bessere Mähleistung erbringt, insbesondere bei längerem Mähgut.

### Erfindungsgemäße Lösung

Diese Aufgabe ist erfindungsgemäß mit einem Mähgerät mit einem Mulchmesser gemäß Anspruch 1 dadurch gelöst, dass der mindestens eine Messerflügel an seinem Flügelendbereich zwei, dort abstehende Messerklingen aufweist. Diese bilden eine erste Schnittebene und eine zweite Schnittebene, wobei die beiden Schnittebenen bezogen auf die Drehachse voneinander verschieden ausgerichtet sind.

Die zwei Messerklingen sind separate, blattförmige Bereiche mit je mindestens einer scharfen Seitenkante bzw. Messerklinge an dem Flügelendbereich. Beim Betrieb des Mähgeräts bzw. beim Drehen des Mulchmessers um die Drehachse schneiden diese geschärften Bereiche das Mähgut in unterschiedlichen Winkeln, definiert durch die erste und die zweite Schnittebene. Dadurch erhöht sich die Wahrscheinlichkeit, das eine der Schnittebenen derart auf einzelne Elemente des Mähguts, zum Beispiel Halme oder Äste, trifft, dass diese geschnitten werden. Damit steigt die Menge an geschnittenem bzw. gemähten Mähgut und somit die Mähleistung des erfindungsgemäßen Mulchmessers.

In einer vorteilhaften Weiterbildung der Erfindung ist die erste Schnittebene bezogen auf die Drehachse im Wesentlichen radial ausgerichtet. Eine zu der Drehachse radiale Ausrichtung der ersten Schnittebene bedeutet, dass das Mähgut in einem Bereich entlang einer von der Drehachse rechtwinklig abgehenden, geraden Linie geschnitten wird. Eine solche erste Schnittebene eignet sich besonders gut zum Schneiden von im Wesentlichen aufrechtstehendem Mähgut, wie zum Beispiel aufrechten Halmen oder dünnen Stämmen.

In einer zweiten vorteilhaften Weiterbildung der Erfindung ist die zweite Schnittebene bezogen auf die Drehachse im Wesentlichen parallel ausgerichtet. Eine zu der Drehachse parallele Ausrichtung der zweiten Schnittebene bedeutet, dass das Mähgut entlang einer im Wesentlichen rechtwinklig zum Radius angeordneten, geraden Linie geschnitten wird. Eine solche zweite Schnittebene eignet sich besonders gut zum Schneiden von im Wesentlichen horizontal angeordnetem Mähgut, wie zum Beispiel abgeschnittenen, umgeknickten oder plattgedrückten Halmen und Ästen. Zudem eignet sich eine solche Schnittebene sehr gut zum Mulchen von abgeschnittenem Mähgut und zum Durchtrennen von Bewuchs im Wald, besonders in Schonungen und Anpflanzungen von Bäumen.

Ferner ist erfindungsgemäß die erste Schnittebene relativ zur zweiten Schnittebene mit einem Neigungswinkel zwischen 45° und 135° und bevorzugt zwischen 85° und 95° ausgerichtet gestaltet. Der Neigungswinkel ist hier ein Maß für die Neigung der ersten Schnittebene im Verhältnis zu der zweiten Schnittebene. Dabei weist vorzugsweise die erste der zwei Schnittebenen eine zu der Drehachse im Wesentlichen radiale Ausrichtung auf, während die zweite Schnittebene in Richtung einer parallelen Ausrichtung zur Drehachse gerichtet ist. Erfindungsgemäß ist die zweite Schnittebene in Richtung zu einer Bodenebene geneigt bzw. nach unten gerichtet. Aufgrund des Neigungswinkels in der oben angegebenen Größe schneidet der mindestens eine Messerflügel das Mähgut auf effiziente Weise. Sowohl aufrecht stehendes als auch waagrechtes bzw. liegendes Mähgut wird dabei geschnitten bzw. zerkleinert.

Bevorzugt sind die beiden Messerklingen mittels einer Teilung eines einstückigen Flügelendbereichs gebildet. Die Teilung des einstückigen Flügelendbereichs ist dabei vorzugsweise ein Schnitt an dem der Nabe abgewandten äußeren Ende des mindestens einen Messerflügels in Richtung der Nabe. Die dadurch gebildeten Messerklingen sind somit beliebig zueinander ausrichtbar und dabei jeweils fest mit dem übrigen Bereich des Messerflügels verbunden. Besonders bevorzugt ist eine der beiden Messerklingen dabei nach unten gebogen und bildet dabei eine Biegekante.

Vorzugsweise sind die beiden Messerklingen als miteinander verschweißte Bauteile gestaltet. Mittels Verschweißen sind die Messerklingen stabil miteinander verbunden. Damit erfolgt eine feste Positionierung der Messerklingen an dem mindestens einen Messerflügel, sowie in ihrer Ausrichtung zueinander. Eine den Messerklingen zugewiesene Funktion, vorzugsweise ein Mähen und Mulchen von Mähgut, ist auf diese Weise dauerhaft sichergestellt.

Alternativ sind die beiden Messerklingen vorteilhaft als verschraubte Bauteile gestaltet. Mittels Verschrauben sind die Messerklingen stabil und dabei einfach lösbar anzubringen. Die Messerklingen sind so einfach auszutauschen. In einer vorteilhaften Weiterbildung sind die beiden Messerklingen mit genau einer Schraubverbindung verschraubt. Dadurch können die Messerklinge besonders einfach gewechselt werden.

In einer weiteren alternativen und vorteilhaften Ausführungsform sind die beiden Messerklingen als vernietete Bauteile gestaltet. Mittels Vernieten sind die Messerklingen ebenfalls einfach und zugleich stabil anzubringen. In einer vorteilhaften Weiterbildung sind die beiden Messerklingen mit mindestens zwei Nieten verbunden, wodurch eine ortsfeste Positionierung der Messerklingen auf dem mindestens einen Messerflügel, sowie ihre Ausrichtung zueinander gewährleistet ist. Als Niet ist vorzugsweise ein Vollniet, ein Hohlniet, ein Stanzniet oder ein Bolzenniet vorgesehen.

Bevorzugt sind die beiden Messerklingen relativ zueinander schwenkbar angeordnet. Dabei sind diese Messerklingen vorzugsweise als miteinander verschraubte oder vernietete Bauteile gestaltet. Die relativ zueinander schwenkbare Anordnung erlaubt eine Einstellung verschiedener Positionen der Messerklingen zueinander. Dadurch kann das erfindungsgemäße Mulchmesser hinsichtlich der Ausrichtung seiner Messerklingen einfach an Eigenschaften des Mähguts angepasst werden. Ferner können die Messerklinge so an dem Messerflügel schwenkbar gehaltert werden, so dass sie im Betrieb einem Hindernis mittels Zurückschwenken ausweichen können.

Bei einer weiteren vorteilhaften Weiterbildung der Erfindung sind die beiden Messerklingen als eine am Messerflügel austauschbare Komponente gestaltet. Mittels dieser austauschbaren Komponente sind benutzte Messerklingen mit neuen Messerklingen ersetzbar. Die Gestaltung beider Messerklingen als eine einzige Komponente erlaubt zudem ein einfaches Montieren und Demontieren der Messerklingen an das bzw. von dem Mulchmesser. Sind die Messerklingen nicht mehr reparierbar, beispielsweise wegen Verschleiß, so muss nicht das gesamte Mulchmesser entsorgt werden, sondern nur die Komponenten mit den abgenutzten Messerklingen. Dies führt mittel- und langfristig zu einer deutlichen Material- und somit auch Kosteneinsparung. Die geringere Menge von zu entsorgendem Material schont zudem die Umwelt. Ferner können für die Messerklingen und die Nabe des erfindungsgemäßen Mulchmesser vorteilhaft unterschiedliche Materialien, wie vergüteter bzw. nicht vergüteter Stahl, gewählt werden.

Ferner ist das Mulchmesser vorteilhaft streifenförmig und/oder als Balken gestaltet. Eine solche Balken- und/oder Streifenform ist kompatibel zu herkömmlichen Messern von Rasenmähern und Freischneidern. Dadurch kann auch ein gewöhnlicher Rasenmäher oder Freischneider mit dem erfindungsgemäßen Mulchmesser ausgestattet werden.

In einer weiteren bevorzugten Ausführungsform beinhaltet das Mulchmesser ein Mähbauteil und ein Mulchbauteil. Dabei enthält das Mähbauteil die Messerklinge mit der ersten Schnittebene und das Mulchbauteil die Messerklinge mit der zweiten Schnittebene. Das Mähbauteil und das Mulchbauteil sind jeweils einzeln nutzbar, also auch jeweils einzeln an das Mähgerät anbringbar. Ferner sind das Mähbauteil und das Mulchbauteil auch in Kombination nutzbar.

### Kurzbeschreibung der Zeichnungen

Nachfolgend werden Ausführungsbeispiele der erfindungsgemäßen Lösung anhand der beigefügten schematischen Zeichnungen näher erläutert. Es zeigt:
- Fig. 1: eine Seitenansicht eines ersten Ausführungsbeispiels eines Mulchmessers gemäß der Erfindung,
- Fig. 2: eine Draufsicht des ersten Ausführungsbeispiels eines Mulchmessers gemäß der Erfindung,
- Fig. 3: eine Seiten-Teilansicht eines zweiten Ausführungsbeispiels eines Mulchmessers gemäß der Erfindung,
- Fig. 4: eine Seiten-Teilansicht eines dritten Ausführungsbeispiels eines Mulchmessers gemäß der Erfindung,
- Fig. 5: eine Seiten-Teilansicht eines vierten Ausführungsbeispiels eines Mulchmessers gemäß der Erfindung und
- Fig. 6: eine Seitenansicht eines fünften Ausführungsbeispiels eines Mulchmessers gemäß der Erfindung.

### Detaillierte Beschreibung der Ausführungsbeispiele

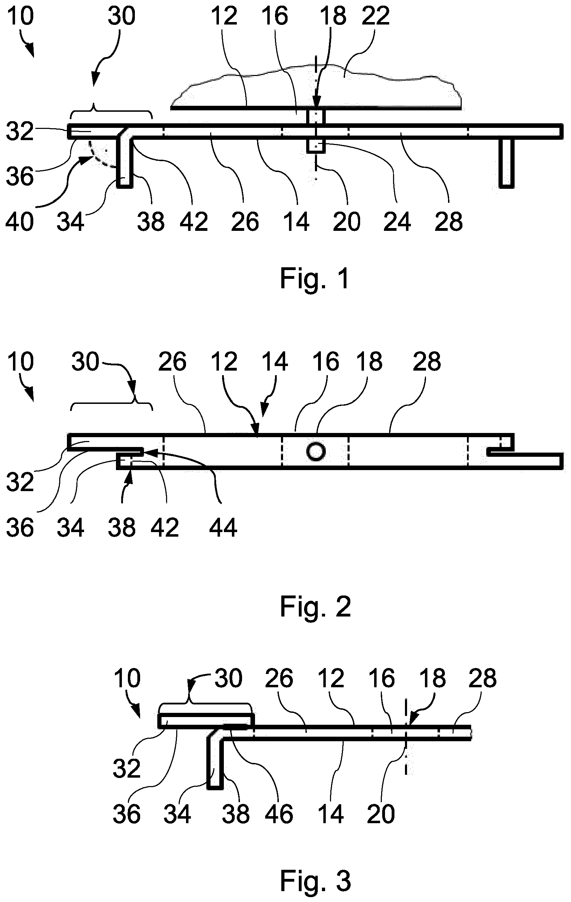

In der Fig. 1 ist ein Mulchmesser 10 mit einer Oberseite 12 und einer Unterseite 14 dargestellt. In der Mitte des Mulchmessers 10 befindet sich eine Nabe 16 mit einer Öffnung 18, durch welche hindurch sich eine Drehachse 20 eines weiter nicht dargestellten Mähgeräts 22 erstreckt. Das Mähgerät 22 ist mit dem Mulchmesser 10 über eine Welle 24 verbunden. Die Welle 24 erstreckt sich dazu von dem Mähgerät 22 durch die Öffnung 18 der Nabe 16 hindurch, wobei das Mulchmesser 10 mit der Welle 24 verschraubt ist.

Von der Nabe 16 des Mulchmessers 10 erstrecken sich ein erster Messerflügel 26 und ein zweiter Messerflügel 28 nach radial außen. Da diese beiden Messerflügel 26, 28 identisch gestaltet sind, werden deren Details nachfolgend nur anhand des ersten Messerflügels 26 beschrieben.

An einem der Nabe 16 abgewandten Ende des Messerflügels 26 befindet sich ein Flügelendbereich 30 mit einer ersten Messerklinge 32 und einer zweiten Messerklinge 34. Dabei bildet die erste Messerklinge 32 eine erste Schnittebene 36 und die zweite Messerklinge 34 eine zweite Schnittebene 38. Die erste Schnittebene 36 ist relativ zu der zweiten Schnittebene 38 mit einem Neigungswinkel 40 ausgerichtet gestaltet. Die Schnittebene 38 steht gewinkelt zu der Unterseite 14, wobei die Schnittebene 38 und die Unterseite 14 eine Biegekante 42 bilden.

Das Mulchmesser 10 rotiert im Betrieb des Mähgeräts 22 um die Drehachse 20 und schneidet dabei ein (nicht dargestelltes) Mähgut. Dabei wird die mit der Nabe 16 drehfest verbundene Welle 24 mittels des Mähgeräts 22 angetrieben.

Das Mähgut wird insbesondere von beiden Messerklingen 32, 34 in den Schnittebenen 36, 38 geschnitten. Die erste Schnittebene 36 ist hier bezogen auf die Drehachse 20 im Wesentlichen radial ausgerichtet, wohingegen die zweite Schnittebene 38 bezogen auf die Drehachse 20 im Wesentlichen parallel ausgerichtet ist. Mit anderen Worten, die erste Schnittebene 36 ist relativ zur zweiten Schnittebene 38 mit dem Neigungswinkel 40 von etwa 90° ausgerichtet gestaltet. Dadurch wird sowohl aufrechtstehendes als auch liegendes Mähgut geschnitten.

Die zur Drehachse 20 parallele Ausrichtung der zweiten Schnittebene 38 ist dadurch erreicht, dass die zweite Messerklinge 34 um die Biegekante 42 nach unten bzw. weg von der Unterseite 14 gebogen ist.

Die Fig. 2 zeigt das Mulchmesser 10 aus Fig. 1 als Draufsicht auf die Oberseite 12. In Fig. 2 ist so die Öffnung 18 der Nabe 16 und eine Teilung 44 des Flügelendbereichs 30 in die zwei Messerklingen 32, 34 ersichtlich. Mittels der Teilung 44 des Flügelendbereichs 30 sind die Messerklingen 32, 34 gebildet, die dabei einstückig mit dem Messerflügel 26 ausgebildet sind. Die derartige Ausgestaltung ist vorzugsweise mit einem Schmiedeprozess hergestellt.

In der Fig. 3 ist ein Ausführungsbeispiel des Mulchmessers 10 veranschaulicht, welches abgesehen von dem Flügelendbereich 30 jenem der Fig. 1 entspricht. Da auch hier beide Messerflügel 26, 28 identisch gestaltet sind, ist der Messerflügel 28 nur angedeutet.

Gemäß Fig. 3 sind an dem Flügelendbereich 30 die beiden Messerklingen 32, 34 als mittels einer Schweißverbindung 46 angebrachte Bauteile gestaltet. Die damit erzielte Funktionalität entspricht jener des in Fig. 1 dargestellten Ausführungsbeispiels.

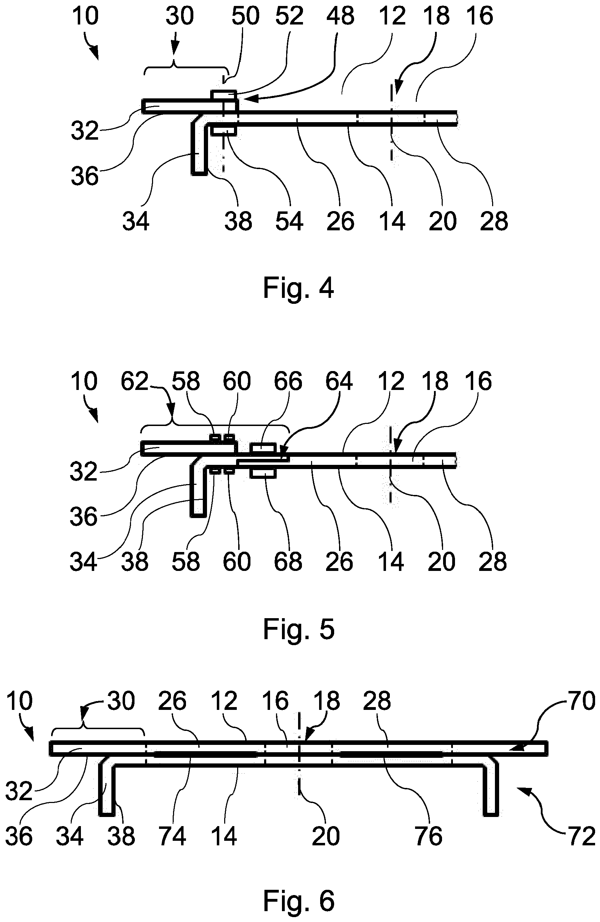

Die Fig. 4 zeigt ein Ausführungsbeispiel des Mulchmessers 10, das abgesehen von dem Flügelendbereich 30 ebenfalls jenem der Fig. 1 entspricht. Auch hier ist aufgrund einer identischen Gestaltung der beiden Messerflügel 26, 28 der Messerflügel 28 nur angedeutet.

Gemäß Fig. 4 sind an dem Flügelendbereich 30 die beiden Messerklingen 32, 34 als mittels einer Schraubverbindung 48 angebrachte Bauteile gestaltet. Mittels dieser Schraubverbindung 48 sind die beiden Klingen 32, 34 relativ zueinander um eine Schwenkachse 50 schwenkbar angeordnet. Die Schraubverbindung 48 beinhaltet eine Schraube 52 und eine Mutter 54. Von der Schraube 52 ist nur der Schraubenkopf sichtbar. Die Schraube 52 erstreckt sich von dem Schraubenkopf ausgehend durch die zwei Messerklingen 32, 34 und die Mutter 54 hindurch.

Bei einer Rotation des derartigen Mulchmessers 10 kann zusätzlich ein Schwenken der Messerklinge 32, 34 um die Schwenkachse 50 erfolgen. Dadurch können die Klingen einem Hinderniss ausweichen, welches sie sonst stumpf werden lassen würde.

In der Fig. 5 ist ein Ausführungsbeispiel des Mulchmessers 10 dargestellt, in welchem die beiden Messerklingen 32, 34 als mittels einer Nietverbindung 56 verbundene Bauteile gestaltet sind. Auch hier ist aufgrund einer identischen Gestaltung der beiden Messerflügel 26, 28 der Messerflügel 28 wieder nur angedeutet.

Die Nietverbindung beinhaltet einen ersten Niet 58 und einen zweiten Niet 60. Von den beiden Nieten 58, 60 sind nur die Nietenköpfe sichtbar, welche die Nieten 58, 60 jeweils endseitig abschließen. Die Nieten 58, 60 erstrecken sich jeweils von einem endseitigen Nietenkopf durch die zwei Messerklingen 32, 34 hindurch bis zu einem anderen endseitigen Nietenkopf. Die beiden Messerklingen 32, 34 sind zudem als eine am Messeflügel 26 austauschbare Komponente bzw. Austauschkomponente 62 gestaltet. Diese Austauschkomponente 62 ist mit dem verbleibenden Teil des Messerflügels 26 mittels einer Schraubverbindung 64 verbunden. Die Schraubverbindung 64 beinhaltet eine Schraube 66 und eine Mutter 68. Auch hier ist von der Schraube 66 nur der Schraubenkopf sichtbar. Die Schraube 66 erstreckt sich von dem Schraubenkopf durch die Austauschkomponente 62, den verbleibenden Teil des Messerflügels 26 und die Mutter 68 hindurch.

Die erzielte Funktionalität entspricht grundsätzlich jener des in Fig. 1 dargestellten Ausführungsbeispiels. Allerdings sind die Messerklingen 32, 34 dabei austauschbar. Für einen solchen Austausch wird die Schraubverbindung 64 gelöst und anschließend die Austauschkomponente 62 entnommen und ersetzt.

Die Fig. 6 zeigt ein Ausführungsbeispiel des Mulchmessers 10, welches hier ein Mähbauteil 70 und ein Mulchbauteil 72 beinhaltet. Diese Bauteile 70, 72 sind an dem Messerflügel 26 jeweils mittels einer Schweißverbindung 74 und an dem Messerflügel 28 jeweils mittels einer Schweißverbindung 76 verbunden.

Wie schon in den vorausgegangenen Ausführungsbeispielen sind die Messerflügel 26, 28 identisch gestaltet. Somit werden deren Details auch hier nur anhand des ersten Messerflügels 26 beschrieben. In dem Flügelendabschnitt 30 des Mähbauteils 70 ist die erste Messerklinge 32 mit der ersten Schnittebene 36 angeordnet. In dem Flügelendabschnitt 30 des Mulchbauteils 72 ist die zweite Messerklinge 34 mit der zweiten Schnittebene 38 angeordnet.

Die erzielte Funktionalität entspricht grundsätzlich jener des in Fig. 1 dargestellten Ausführungsbeispiels. Allerdings ist eine Herstellung des Mulchmessers 10 hier einfacher. Das Mähbauteil 70 und das Mulchbauteil 72, beide auch unabhängig voneinander verwendbar, werden mittels der Schweißverbindungen 74, 76 kombiniert.

Bei einem nicht dargestellten Ausführungsbeispiel sind in Entsprechung zu Fig. 6 anstelle und/oder zusätzlich zu der Schweißverbindungen 74, 76 auch Schraubverbindungen und/oder Nietverbindungen vorgesehen.

### Bezugszeichenliste

- 10: Mulchmesser
- 12: Oberseite
- 14: Unterseite
- 16: Nabe
- 18: Öffnung
- 20: Drehachse
- 22: Mähgerät
- 24: Welle
- 26: Messerflügel
- 28: Messerflügel
- 30: Flügelendbereich
- 32: Messerklinge
- 34: Messerklinge
- 36: Schnittebene
- 38: Schnittebene
- 40: Neigungswinkel
- 42: Biegekante
- 44: Teilung
- 46: Schweißverbindung
- 48: Schraubverbindung
- 50: Schwenkachse
- 52: Schraube
- 54: Mutter
- 56: Nietverbindung
- 58: Niet
- 60: Niet
- 62: Austauschkomponente
- 64: Schraubverbindung
- 66: Schraube
- 68: Mutter
- 70: Mähbauteil
- 72: Mulchbauteil
- 74: Schweißverbindung
- 76: Schweißverbindung

## Patentansprüche

1. Mähgerät (22) mit einem Mulchmesser (10) mit einer um eine Drehachse (20) rotierbaren Nabe (16) und mindestens einem von der Nabe (16) in radialer Richtung abstehenden Messerflügel (26), der einen von der Nabe (16) abgewandten Flügelendbereich (30) aufweist,
wobei der mindestens eine Messerflügel (26) an seinem Flügelendbereich (30) zwei, dort abstehende Messerklingen (32, 34) aufweist, die eine erste Schnittebene (36) und eine zweite Schnittebene (38) bilden, wobei die beiden Schnittebenen (36, 38) bezogen auf die Drehachse (20) voneinander verschieden ausgerichtet sind, und die erste Messerklinge (32) die erste Schnittebene (36) sowie die zweite Messerklinge (34) die zweite Schnittebene (38) bildet,
**dadurch gekennzeichnet, dass** die erste Schnittebene (36) relativ zur zweiten Schnittebene (38) mit einem Neigungswinkel (40) zwischen 45° und 135° ausgerichtet gestaltet ist, wobei die zweite Schnittebene (38) in Richtung zu einer Bodenebene geneigt ist, derart, dass im Wesentlichen horizontal angeordnetes Mähgut schneidbar ist.

2. Mähgerät nach Anspruch 1,
**dadurch gekennzeichnet, dass** die erste Schnittebene (36) bezogen auf die Drehachse (20) im Wesentlichen radial ausgerichtet ist.

3. Mähgerät nach Anspruch 1 oder 2,
**dadurch gekennzeichnet, dass** die zweite Schnittebene (38) bezogen auf die Drehachse (20) im Wesentlichen parallel ausgerichtet ist.

4. Mähgerät nach einem der Ansprüche 1 bis 3,
**dadurch gekennzeichnet, dass** die erste Schnittebene (36) relativ zur zweiten Schnittebene (38) mit einem Neigungswinkel (40) zwischen 85° und 95° ausgerichtet gestaltet ist.

5. Mähgerät nach einem der Ansprüche 1 bis 4,
**dadurch gekennzeichnet, dass** die beiden Messerklingen (32, 34) mittels einer Teilung (44) eines einstückigen Flügelendbereichs (30) gebildet sind.

6. Mähgerät nach einem der Ansprüche 1 bis 4,
**dadurch gekennzeichnet, dass** die beiden Messerklingen (32, 34) als miteinander verschweißte Bauteile gestaltet sind.

7. Mähgerät nach einem der Ansprüche 1 bis 4,
**dadurch gekennzeichnet, dass** die beiden Messerklingen (32, 34) als miteinander verschraubte Bauteile gestaltet sind.

8. Mähgerät nach einem der Ansprüche 1 bis 4,
**dadurch gekennzeichnet, dass** die beiden Messerklingen (32, 34) als miteinander vernietete Bauteile gestaltet sind.

9. Mähgerät nach Anspruch 7 oder 8,
**dadurch gekennzeichnet, dass** die beiden Messerklingen (32, 34) relativ zueinander schwenkbar angeordnet sind.

10. Mähgerät nach einem der Ansprüche 1 bis 9,
**dadurch gekennzeichnet, dass** die beiden Messerklingen (32, 34) als eine am Messerflügel (26) austauschbare Komponente (62) gestaltet sind.

## Claims

1. Mower (22) with a mulching blade (10) having a hub (16), which is rotatable about an axis of rotation (20), and at least one blade wing (26) which protrudes from the hub (16) in a radial direction and has a wing end region (30) remote from the hub (16),
wherein the at least one blade wing (26) has at its wing end region (30) two knife blades (32, 34) which protrude therefrom and form a first cutting plane (36) and a second cutting plane (38), wherein the two cutting planes (36, 38) are oriented differently to one another relative to the axis of rotation (20), and the first knife blade (32) forms the first cutting plane (36) and the second knife blade (34) forms the second cutting plane (38), **characterised in that** the first cutting plane (36) is oriented relative to the second cutting plane (38) with an angle of inclination (40) of between 45° and 135°, wherein the second cutting plane (38) is inclined in the direction towards a ground plane in such a manner that material to be mowed that is disposed substantially horizontally can be cut.

2. Mower according to claim 1,
**characterised in that** the first cutting plane (36) is oriented substantially radially relative to the axis of rotation (20).

3. Mower according to claim 1 or 2,
**characterised in that** the second cutting plane (38) is oriented substantially parallel relative to the axis of rotation (20).

4. Mower according to any one of claims 1 to 3,
**characterised in that** the first cutting plane (36) is oriented relative to the second cutting plane (38) with an angle of inclination (40) of between 85° and 95°.

5. Mower according to any one of claims 1 to 4,
**characterised in that** the two knife blades (32, 34) are formed by means of a division (44) of a one-piece wing end region (30).

6. Mower according to any one of claims 1 to 4,
**characterised in that** the two knife blades (32, 34) are in the form of components that are welded together.

7. Mower according to any one of claims 1 to 4,
**characterised in that** the two knife blades (32, 34) are in the form of components that are bolted together.

8. Mower according to any one of claims 1 to 4,
**characterised in that** the two knife blades (32, 34) are in the form of components that are riveted together.

9. Mower according to claim 7 or 8,
**characterized in that** the two knife blades (32, 34) are arranged so as to be pivotable relative to one another.

10. Mower according to any one of claims 1 to 9,
**characterised in that** the two knife blades (32, 34) are in the form of an interchangeable component (62) on the blade wing (26).

## Revendications

1. Appareil de fauchage (22) doté d'un couteau déchiqueteur (10) avec un moyeu (16) pouvant pivoter autour d'un axe de rotation (20) et au moins une ailette de coupe (26) saillant dans la direction radiale hors du moyeu (16) comportant une zone d'extrémité d'ailette (30) saillant hors du moyeu (16) ;
l'au moins une ailette de coupe (26) comportant au niveau de sa zone d'extrémité d'ailette (30) deux lames de coupe (32, 34) saillant à cet endroit qui forment un premier plan de coupe (36) et un deuxième plan de coupe (38), les deux plans de coupe (36, 38) ayant une orientation différente l'une de l'autre par rapport à l'axe de rotation (20) et la première lame de coupe (32) formant le premier plan de coupe (36) et la deuxième lame de coupe (34) formant le deuxième plan de coupe (38), **caractérisé en ce que** le premier plan de coupe (36) est formé de façon à s'orienter par rapport au deuxième plan de coupe (38) selon un angle d'inclinaison (40) compris entre 45° et 135°, le deuxième plan de coupe (38) étant incliné en direction d'un plan de sol, de façon à pouvoir couper les plantes à faucher pour l'essentiel horizontalement.

2. Appareil de fauchage selon la revendication 1, **caractérisé en ce que** le premier plan de coupe (36) est orienté pour l'essentiel dans le plan radial par rapport à l'axe de rotation (20).

3. Appareil de fauchage selon la revendication 1 ou 2, **caractérisé en ce que** le deuxième plan de coupe (38) est orienté pour l'essentiel parallèlement par rapport à l'axe de rotation (20).

4. Appareil de fauchage selon l'une quelconque des revendications 1 à 3, **caractérisé en ce que** le premier plan de coupe (36) est agencé de façon à être orienté selon un angle d'inclinaison (40) compris entre 85° et 95° par rapport au deuxième plan de coupe (38).

5. Appareil de fauchage selon l'une quelconque des revendications 1 à 4, **caractérisé en ce que** les deux lames de coupe (32, 34) sont formées à l'aide d'une séparation (44) d'une zone d'extrémité d'ailette (30) réalisée d'un seul tenant.

6. Appareil de fauchage selon l'une quelconque des revendications 1 à 4, **caractérisé en ce que** les deux lames de coupe (32, 34) sont réalisées sous la forme de composants soudés entre eux.

7. Appareil de fauchage selon l'une quelconque des revendications 1 à 4, **caractérisé en ce que** les deux lames de coupe (32, 34) sont réalisées sous la forme de composants vissés entre eux.

8. Appareil de fauchage selon l'une quelconque des revendications 1 à 4, **caractérisé en ce que** les deux lames de coupe (32, 34) sont agencées sous la forme composants rivetés entre eux.

9. Appareil de fauchage selon la revendication 7 ou 8, **caractérisé en ce que** les deux lames de coupe (32, 34) sont disposées de façon à pouvoir pivoter l'une par rapport à l'autre.

10. Appareil de fauchage selon l'une quelconque des revendications 1 à 9, **caractérisé en ce que** les deux lames de coupe (32, 34) sont agencées sous la forme d'un composant (62) pouvant être remplacé au niveau de l'ailette de coupe (26).
